Europäisches Patentamt

European Patent Office

Office européen des brevets

(11) Publication number: **0 244 940**
A2

# EUROPEAN PATENT APPLICATION

(21) Application number: 87302698.3

(22) Date of filing: 27.03.87

(51) Int. Cl.⁴: **C 04 B 35/00,** B 22 C 1/20, B 22 F 1/00

(30) Priority: 31.03.86 US 846407

(43) Date of publication of application: 11.11.87 Bulletin 87/46

(84) Designated Contracting States: BE DE FR GB IT NL SE

(71) Applicant: THE DOW CHEMICAL COMPANY, 2030 Dow Center Abbott Road P.O. Box 1967, Midland, MI 48640 (US)

(72) Inventor: Schuetz, James E., 1512 Crane Court, Midland Michigan 48640 (US)

(74) Representative: Raynor, John et al, W.H. Beck, Greener & Co 7 Stone Buildings Lincoln's Inn, London WC2A 3SZ (GB)

(54) Ceramic, cermet, or metal powder materials with a polymeric binder, and process for producing formed shapes of ceramic, cermets, or metal powders.

(57) A composition is disclosed comprising a ceramic, cermet or metal powder material and, as a binder, poly(ethyloxazoline). A process for preparing the composition is provided.

EP 0 244 940 A2

TITLE MODIFIED
see front page

## NOVEL CERAMIC, CERMET OR
## METAL POWDER BINDER AND PROCESS THEREFOR

This invention concerns generally a ceramic, cermet or metal powder composition and a process for producing said composition.

Conventional ceramic, cermet or metal powder processing typically comprises ball milling a slurry, which contains a ceramic, cermet or metal powder material and a solvent, to reduce the particle size of the material. The milled slurry is dried, such as by spray drying or pan drying, and the dried composition is then formed into articles.

In the fabrication of ceramic, cermet or metal powder articles, a binder may be employed. A good binder must satisfy several criteria. It should be soluble in the slurry containing the ceramic, cermet or metal powder and it should have a low solution viscosity thereby permitting high solids content in the slurry and facilitating ball milling. Also, a good binder should be compatible with other additives and processing steps. Since the binder is not a desirable component of a final article, it should be easily removable at some point in the processing sequence. In addition, the binder should impart green strength to the green fabricated article.

Surprisingly, it has now been found by this invention that a suitable binder is poly-(ethyloxazoline) for use in a ceramic, cermet or powder composition.

Another aspect of this invention is a process comprising forming a slurry containing a ceramic, cermet or powder material and poly(ethyloxazoline), converting said slurry into a substantially dry powder, and converting the powder into a ceramic, cermet or metal powder body of a desired shape.

A further aspect of this invention is a ceramic, cermet or metal powder body prepared by the process comprising forming a slurry containing the material and poly(ethyloxazoline), converting said slurry to a substantially dry powder, and converting the powder into a ceramic, cermet or metal powder body of a desired shape.

In general, any ceramic composition which comprises an inorganic, nonmetallic material as its essential component can be employed in this invention. Minor impurities can be present in the ceramic material so long as they do not substantially affect the densification of said material. Preferably, the ceramic material consists essentially of a ceramic and, more preferably, the ceramic material consists of a ceramic. Preferred ceramics include, for example, oxides, carbides, nitrides, silicides, borides, phosphides, sulfides and mixtures thereof. More preferred ceramics include magnesia, mullite, thoria, beryllia, urania, spinels, zirconium oxide, bismuth oxide, aluminum oxide, magnesium oxide, barium titanate, corderite, boron nitride, tungsten carbide, tantalum carbide, titanium carbide, niobium carbide, zirconium carbide, boron carbide, hafnium carbide, silicon carbide, niobium boron carbide, aluminum nitride, titanium nitride, zirconium nitride, tantalum nitride, hafnium nitride, niobium nitride, boron nitride, silicon nitride, titanium boride, chromium boride, zirconium boride, tantalum boride, molybdenum boride, tungsten boride, cerium sulfide, molybdenum sulfide, cadmium sulfide, zinc sulfide, titanium sulfide, magnesium sulfide, zirconium sulfide and mixtures and alloys of these. Even more preferred ceramics include zirconium oxide, aluminum oxide, magnesium oxide, barium titanate, silicon carbide, corderite, spinels and boron nitride. The most preferred ceramic is aluminum oxide.

Also, any cermet composition which comprises at least one inorganic, metallic material as one of its components can be employed in this invention. Minor impurities can be present in the cermet material so long as they do not substantially affect the densification of said material. Preferred cermets include, for example, oxides, carbides, nitrides, silicides, borides, sulfides or mixtures thereof. More preferred cermet materials include alumina, zirconia, magnesia, mullite, zircon, thoria, beryllia, urania, spinels, tungsten carbide, tantalum carbide, titanium carbide, niobium carbide, zirconium carbide, boron carbide, hafnium carbide, silicon carbide, niobium boron carbide, aluminum nitride, titanium nitride, zirconium nitride, tantalum nitride, hafnium nitride, niobium nitride, boron nitride, silicon nitride, titanium boride, chromium boride, zirconium boride, tantalum boride, molybdenum boride, tungsten boride, cerium sulfide, molybdenum sulfide, cadmium sulfide, zinc sulfide, titanium sulfide, magnesium sulfide, zirconium sulfide or mixtures thereof. Even more preferred cermet materials include tungsten carbide, niobium carbide, titanium carbide, silicon carbide, niobium boron carbide, tantalum carbide, boron carbide, alumina, silicon nitride, boron nitride, titanium nitride, titanium boride or mixtures thereof. Even more preferred cermet materials are tungsten carbide, niobium carbide and titanium carbide. The most preferred cermet material is tungsten carbide.

Furthermore, any metal powder composition which comprises a metallic material or mixtures of metallic materials as its essential component can be employed in this invention. Minor impurities can be present so long as they do not substantially adversely affect the properties of the final material. preferred metal powders include, for example, alumina, zirconia, magnesia, thoria, beryllia, tungsten, tantalum, titanium, niobium, boron, hafnium, silicon, aluminum, zirconium, chromium, molybdenum, cerium, cadmium, zinc, magnesium, cobalt, nickel, iron, vanadium, palladium, copper or alloys thereof or mixtures thereof.

In a preferred embodiment of this invention, the ceramic, cermet or metal powder material is particulate and has a particle size of about 100 microns or less, more preferably about 10 microns or less, and most preferably about 1 micron or less. In another preferred embodiment, fibrous ceramic material

34,743-F                          -4-

or other reinforcing ceramic material can be mixed with the particulate ceramic material. It is believed that incorporation of fibrous ceramic material or other reinforcing ceramic material may increase the strength and fracture toughness of the ceramic body produced.

The binder, poly(ethyloxazoline), is employed in a binding amount. Preferably, the binder is employed in an amount sufficient to provide a green ceramic article with enough strength to retain its shape during normal handling and processing. Preferably the ceramic composition comprises between 0.1 and 20 weight percent poly(ethyloxazoline) and more preferably between 0.1 and 10 weight percent based on the weight of the ceramic material. Even more preferably, said composition comprises between 0.2 and 5 weight percent of poly(ethyloxazoline), and most preferably from 0.5 to 3.0 weight percent. The poly(ethyloxazoline) preferably has a weight average molecular weight ranging from 10,000 to 750,000 and more preferably from 50,000 to 500,000.

In a preferred embodiment of this invention, the composition consists of a ceramic, cermet or metal powder and poly(ethyloxazoline), and more preferably the composition consists of a ceramic and poly-(ethyloxazoline).

An optional component of the composition of this invention is a metallic material of cobalt, nickel, iron, tungsten, molybdenum, tantalum, titanium, chromium, niobium, boron, zirconium, vanadium, silicon, palladium, hafnium, aluminum, copper and alloys and mixtures thereof.

The process of this invention comprises forming a slurry of the material and poly(ethyloxazoline). The slurry preferably contains a solvent which substantially solubilizes poly(ethyloxazoline). Preferred solvents include polar organic solvents such as water, methanol, ethanol, acetone, and mixtures thereof. Water is the most preferred solvent due to its ease of use and nonflammability. However, solvents such as methanol, ethanol and acetone are particularly useful in this invention due to the chemical reactions that may occur if the ceramic is in the presence of water. For example, nitrides may form oxides in the presence of water, and this may or may not be desired.

In a preferred embodiment of this invention, the slurry, comprising particulate ceramic, cermet or metal powder material and poly(ethyloxazoline), is ball milled by conventional and well-known techniques. The ball milling reduces the particle size of the ceramic and distributes the poly(ethyloxazoline) substantially uniformly over the ceramic particles. Poly(ethyloxazoline) may facilitate said milling due to its low solution viscosity, thereby permitting a high solid to liquid ratio. In addition, a dispersant, such as DARVAN®, an ammonium polyelectrolyte commercially available from R. T. Vanderbilt Company, Inc., can be added to the above slurry to facilitate milling and aid in maintaining a high solid to liquid ratio.

The slurry preferably contains a solids content of between 20 and 80 percent and more preferably between 50 and 70 percent. A high solid to liquid ratio in the slurry is desirable for several well-known reasons. Excess solvent preferably is removed prior to further processing. Excessive solvent may produce lower density particles and higher losses of fine particles.

The slurry can be converted into a substantially dry powder by methods known to those skilled in the art. Any method which produces a substantially dry powder from the slurry can be utilized in this invention. Preferably, said conversion is accomplished by spray drying or pan drying, with or without the application of heat. Prior to converting said slurry, the slurry preferably is filtered to obtain the smallest particles.

In one preferred embodiment, the slurry is converted into a dry powder in a nitrogen atmosphere. The use of a nitrogen atmosphere can prevent oxidation of the ceramic, cermet or metal powder material which typically may occur in an oxygen-containing atmosphere.

A preformed ceramic, cermet or metal powder article, or preform, comprising the ceramic, cermet or metal powder material and poly(ethyloxazoline) can be fabricated by any suitable means such as, for example, dry pressing, isostatic pressing, extrusion or slip casting. The preform preferably will have the desired shape of the final product and have sufficient density to substantially retain its shape during handling and further processing. The green preform possesses greater green compressive strength than preforms prepared using binders currently known in the art.

The preform can be heated to remove or burn out the poly(ethyloxazoline). It is desirable to burn out the poly(ethyloxazoline) over a range of temperatures.

For poly(ethyloxazoline), burn out typically is accomplished over a temperature range between 380 and 450°C. Details as to useful time, temperature and pressure range are easily ascertained by workers in the field.

The preform can be further densified following binder removal to produce the final ceramic product.

Other known ingredients can be present in this process of forming the ceramic product, such as plasticizers (e.g. propylene glycol).

The following examples are included for illustrative purpose only, and are not intended to limit the scope of the invention or claims. All parts and percentages are by weight unless otherwise specified.

Example 1

A slurry containing poly(ethyloxazoline) (25 g) having a weight average molecular weight of approximately 200,000, deionized water (302 g), DARVAN® (1.5 g) and aluminum oxide (1,000 g) was mixed for 5 minutes. Then, the slurry was ball milled in a 1-gallon (0.0038 l) ball mill containing aluminum oxide balls [1-inch (2.5 cm) diameter] for 20 hours and then was screened through a 100-mesh screen to remove any oversized materials and the balls. The slurry was then air dried for 12 hours at ambient temperature. A portion of the powder was pressed into pellets under 16,000 psi (110 MPa). The green compressive strength of the pellets was measured using an Instron Tester. The results are summarized in Table 1.

Comparative Experiment 1

(Not an embodiment of the invention.)

A comparative sample pellet was prepared by substantially following the procedure of Example 1 except that polyvinyl alcohol (GELVETOL® 20/30) available from Monsanto Company, was used as the binder instead of poly(ethyloxazoline). The data obtained is summarized in Table I.

34,743-F

## Table 1

| Binder | Percent[4] | Percent[5] Solids | Viscosity[1] (CPS) | Percent Water[2] After Drying | Green[3] Density (g/cc) | Green[3] Compressive Strength (psi) ASTM D-695 |
|---|---|---|---|---|---|---|
| Poly(ethyloxazoline) | 2.5 | 70.0 | 2120 | 0.44 | 2.310 | 1320 |
| Polyvinyl alcohol | 2.5 | 70.0 | 1520 | 0.39 | 2.292 | 810 |

[1]Brookfield, #5 spindle, 50 rpm.
[2]Gravimetric, percent weight loss after heating 1.5 hours at 127°C.
[3]Triplicate samples.
[4]Percent of the ceramic/binder composition which is binder.
[5]Percent of the slurry which is solids.

Example 2

Aqueous slurries having 70.0 weight percent solids, 3.0 weight percent poly(ethyloxazoline), with several concentrates of propylene glycol as a plasticizer were prepared. The composition of the slurry was as follows:

| Ingredient | Grams |
|---|---|
| Water | 36.2 |
| Propylene glycol | vary |
| Poly(ethyloxazoline) | 28.0 |
| DARVAN® | 0.1 |
| $Al_2O_3$(Alcoa A-16,SG) | 135.8 |

The first four ingredients were mixed five minutes. The last ingredient was added and mixing continued for 25 minutes. The slurry was thinly spread onto a film and air dried for 16-24 hours at ambient temperature. The dried powder was ground and passed through a 40 mesh screen. The powder was pressed into pellets at 16,000 psi (110 MPa). The green compressive strength of the pellets was measured using an Instron Tester. The results are summarized in Table 2. The green compressive strength is given in Table 3.

TABLE 2

| Binder | Green Density (g/cc) Percent propylene Glycol | | | | |
|---|---|---|---|---|---|
| | 0 | 2.5 | 5.0 | 7.5 | 10.0 |
| Poly(ethyloxazoline)-50 | 2.331 | 2.255 | 2.295 | 2.286 | 2.270 |
| Poly(ethyloxazoline)-200 | 2.280 | 2.288 | 2.284 | 2.302 | 2.299 |
| Poly(ethyloxazoline)-400 | 2.290 | 2.332 | 2.308 | 2.305 | 2.310 |
| Methocel® E-3[1] | 2.242 | 2.290 | 2.294 | 2.300 | 2.286 |
| Polyvinyl alcohol[2] | 2.232 | 2.281 | 2.777 | 2.292 | 2.298 |

[1]Trademark of The Dow Chemical Company, not an example of this invention.
[2]Vinol 205®, trademark of Air Products and Chemicals, not an example of this invention.

## TABLE 3

| Binder | Green Density (g/cc) Percent propylene Glycol | | | | |
|---|---|---|---|---|---|
| | 0 | 2.5 | 5.0 | 7.5 | 10.0 |
| Poly(ethyloxazoline)-50 | 785 | 955 | 800 | 970 | 685 |
| Poly(ethyloxazoline)-200 | 1010 | 2210 | 2138 | 1938 | 1560 |
| Poly(ethyloxazoline)-400 | 1375 | 2270 | 1975 | 1850 | 1585 |
| Methocel® E-3[1] | 740 | 825 | 1015 | 1035 | 990 |
| Polyvinyl alcohol[2] | 1305 | 1450 | 1285 | 1300 | 1113 |

[1]Trademark of The Dow Chemical Company, not an example of this invention.
[2]Vinol 205®, trademark of Air Products and Chemicals, not an example of this invention.

Example 3

When the procedure of Example 1 was repeated using the following materials, the green density and green compressive strength resulted as shown in Table 4.

TABLE 4

| Binder | %Binder | %WC/Co[2] | Green Density (g/cc) | Green Compressive Strength (psi) |
|---|---|---|---|---|
| Poly(ethyloxazoline)-200 | 2.5 | 97.5 | 7.701 | 10,800 |
| Parafin Wax[1] (ESAR-145) | 3.0 | 97.0 | 8.286 | 1,510 |

[1]Not an example of this invention.

[2]Tungsten carbide with 6% cobalt.

Example 4

The procedure of Example 1 was repeated using the following ingredients:

| Sample | Ingredient | Wt.% | Grams |
|--------|-----------|------|-------|
| A[1] | Alumina ($Al_2O_3$) (A-16SG) | 96 | - |
| | Boron Carbide | 4 | - |
| | Citric acid | 0.1 | - |
| | Carbowax®[2] 3350 | 2.5 | - |
| | Water | 33.3 | - |
| B | Alumina ($Al_2O_3$) (A-16SG) | - | 940 |
| | Boron Carbide | - | 39.17 |
| | Citric acid | - | 0.97 |
| | Poly(ethyloxazoline) (122.4 g of 20%) | - | 24.48 |
| | Water | - | 321.72 |

[1]Not an example of this invention.

[2]Trademark of Union Carbide for polyethylene glycol.

Sample B had the last three ingredients mixed, then added to the first two ingredients.

Pellets were prepared for both samples according to Example 1.

The green density and green compressive strength for both samples are given in Table 5.

Table 5

| Binder | % Binder | %Al$_2$O$_3$ | %B$_4$C | %Citric Acid | Green Density (g/cc) | Green Compressive Strength (psi) |
|---|---|---|---|---|---|---|
| Poly(ethyloxazoline)-200 | 2.4 | 93.6 | 3.9 | 0.1 | 2.251 | 2350 |
| Carbowax® 3350[1] | 2.4 | 93.6 | 3.9 | 0.1 | 2.429 | 340 |

[1]Not an example of this invention, Trademark of Union Carbide for polyethylene glycol.

0 244 940

- 18 -

CLAIMS

1.  A composition comprising a ceramic, cermet or metal powder material and poly(ethyloxazoline).

2.  A composition as claimed in Claim 1 wherein the said material is an oxide, carbide, nitride, silicide, boride, sulfide, phosphide or a mixture of two or more thereof.

3.  A composition as claimed in Claim 1 or Claim 2 wherein the said material is a ceramic.

4.  A composition as claimed in any one of the preceding claims wherein the said material contains cobalt, nickel, iron, tungsten, molybdenum, tantalum, titanium, chronium, niobium, boron, zirconium, vanadium, silicon, palladium, hafnium, aluminum, copper, an alloy of one or more thereof or a mixture of two or more thereof.

5.  A composition as claimed in any one of the preceding claims wherein the said material contains alumina, zirconia, magnesia, mullite, zircon, thoria, beryllia, urania, a spinel, tungsten carbide, tantalum carbide, titanium carbide, niobium carbide, zirconium carbide, boron carbide, hafnium carbide, silicon carbide, niobium boron carbide, aluminum nitride, zirconium nitride, tantalum nitride, silicon nitride, boron nitride, titanium nitride, hafnium nitride, niobium nitride, titanium boride, chromium boride, zirconium boride, tantalum boride, molybdenum boride, tungsten boride, cerium sulfide, molybdenum sulfide, cadmium sulfide, zinc sulfide, titanium sulfide, magnesium sulfide, zirconium sulfide, or a mixture of two or more thereof.

6. A composition as claimed in any one of the preceding claims comprising from 0.1 to 20 weight percent of poly(ethyloxazoline).

7. A composition as claimed in any one of the preceding claims wherein the poly(ethyloxazoline) has a weight average molecular weight of from 10,000 to 750,000.

8. A composition as claimed in Claim 3 wherein the ceramic material contains aluminum oxide.

9. A process comprising for producing a formed shape of a ceramic, cermet or metal powder material which process comprises forming a slurry of the said material and poly(ethyloxazoline), converting said slurry into a substantially dry powder and converting the powder into a body of a desired shape.

10. A process as claimed in Claim 9 wherein the slurry has a solids content of from 20 to 80 weight percent.

11. A process as claimed in Claim 10 wherein the slurry comprises a polar organic solvent which substantially solubilizes poly(ethyloxazoline).

- 20 -

12. A process as claimed in any one of Claims 9 to 11 wherein the slurry is converted into a dry powder in a substantially nitrogen atmosphere.

13. A process as claimed in any one of Claims 9 to 12 wherein the body is heated to substantially burn out the poly(ethyloxazoline).

14. A process as claimed in any one of Claims 9 to 13 wherein the powder is a composition as claimed in any one of Claims 1 to 8.

15. A composition prepared by forming a slurry comprising a ceramic, cermet, or metal powder, and poly(ethyloxazoline), converting the said slurry into a substantially dry powder and converting the slurry into a body of a desired shape.